# EUROPEAN PATENT APPLICATION

(11) **EP 4 270 274 A1**
(43) Date of publication of application: **01.11.2023**
(21) Application number: 20967021.5
(22) Date of filing: 25.12.2020
(51) Int. Cl.: G06Q 10/04, G06Q 50/10

(54) **INTER-APPARATUS MOVEMENT TIME ESTIMATION DEVICE, INTER-APPARATUS MOVEMENT TIME ESTIMATION METHOD, AND APPARATUS**

(71) Applicant: MITSUBISHI ELECTRIC CORPORATION, Chiyoda-ku Tokyo 100-8310 (JP)
(72) Inventor: SHIDA, Tetsuro, Tokyo 100-8310 (JP)
(74) Representative: Pfenning, Meinig & Partner mbB
(86) International application number: PCT/JP2020/048829
(87) International publication number: WO 2022/137535

(57) **Abstract**

An inter-apparatus movement time estimation device according to the present disclosure can easily estimate time required for a user to move between a plurality of apparatuses for operation.
An inter-apparatus movement time estimation device (120) according to the present disclosure includes: a communication unit (121) to receive, from a plurality of apparatuses, operation time information for a user to operate each of the plurality of apparatuses; a combination generation unit (123) to generate a plurality of combinations of the operation time of a first apparatus and the operation time of a second apparatus; an operation time difference computation unit (124) to compute a difference between the operation time of the first apparatus and the operation time of the second apparatus as an inter-apparatus operation time difference; an exclusion unit (125) to output an exclusion result in which the inter-apparatus operation time difference whose size is relatively small or whose occurrence probability is relatively low is excluded; and an inter-apparatus movement time calculation unit (126) to estimate time required to move between the first apparatus and the second apparatus on the basis of the exclusion result.

## Description

### [Technical Field]

The present disclosure relates to an inter-apparatus movement time estimation device, an inter-apparatus movement time estimation method for estimating time required for a user to move around a plurality of apparatuses, and apparatuses that communicate with the inter-apparatus movement time estimation device.

### [Background Art]

Patent Document 1 describes a work standardization support system helping to standardize movement paths of operators. This work standardization support system detects position information and time information about an operator during a work involving movement, and proposes a standard movement path for the work on the basis of the detected position information and the time information. In this work standardization support system, the operator wears an IC tag, and a tag reader that receives radio waves from the IC tag is installed in each work area for detecting the position information and the time information about the operator. When receiving a radio wave from the IC tag, the tag reader transmits received identification information of the IC tag transmitting the radio wave, position information indicating the location of the tag reader itself, and time information indicating the time of receiving the radio wave to a management server. The management server calculates the time difference between the received times to obtain the time required for the operator's work between the locations indicated by the position information received.

### [Prior Art Documents]

### Patent Documents

[Patent Document 1] Japanese Unexamined Patent Application Publication No. 2009-146166

### [Summary of the Invention]

### [Problems to be Solved by the Invention]

However, the method of detecting the locations and the times of the operator being there, described in Patent Document 1, requires the operator to wear the IC tag, which is time consuming. Also, the method described in Patent Document 1 is premised on works to be performed on the job at a manufacturing site, for example. In that case, it would be possible to require the operators to wear an IC tag while on the job. However, it is impossible to bring such a method, for example, in daily life at home because no family member wears such an IC tag.

The present disclosure aims to provide an inter-apparatus movement time estimation device and an inter-apparatus movement time estimation method for easily estimating time required for a user to move around a plurality of apparatuses, and apparatuses that communicate with the inter-apparatus movement time estimation device.

### [Means for Solving Problem]

An inter-apparatus movement time estimation device according to the present disclosure includes: a communication unit to receive, from a plurality of apparatuses, a plurality of operation notification packets each containing operation time information which is information about an operation time of a user for each of the apparatuses; a combination generation unit to generate a plurality of combinations of an operation time of a first apparatus among the plurality of apparatuses and an operation time of a second apparatus among the plurality of apparatuses from the operation time information contained in each of the plurality of operation notification packets received by the communication unit; an operation time difference computation unit to compute a difference between the operation time of the first apparatus and the operation time of the second apparatus as an inter-apparatus operation time difference for each of the plurality of combinations generated by the combination generation unit; an exclusion unit to output an exclusion result in which an inter-apparatus operation time difference whose occurrence probability is relatively low or whose size is relatively small is excluded from a plurality of the inter-apparatus operation time differences computed by the operation time difference computation unit; and an inter-apparatus movement time calculation unit to estimate time required for the user to move between the first apparatus and the second apparatus as a necessary inter-apparatus movement time on the basis of the exclusion result outputted by the exclusion unit.

An inter-apparatus movement time estimation method according to the present disclosure for estimating time required for a user to move between a plurality of apparatuses includes: receiving, from the plurality of apparatuses, a plurality of operation notification packets each containing operation time information which is information about an operation time of a user for each of the apparatuses; generating a plurality of combinations of an operation time of a first apparatus among the plurality of apparatuses and an operation time of a second apparatus among the plurality of apparatuses from the operation time information contained in each of the plurality of operation notification packets received; computing, for each of the plurality of combinations, a difference between the operation time of the first apparatus and the operation time of the second apparatus as an inter-apparatus operation time difference; outputting an exclusion result in which an inter-apparatus operation time difference whose occurrence probability is relatively low or whose size is relatively small is excluded from a plurality of the inter-apparatus operation time differences; and estimating time required for the user to move between the first apparatus and the second apparatus on the basis of the exclusion result.

An apparatus according to the present disclosure includes: an operation input unit to be operated by a user; and a communication unit to send operation time information which is information about an operation time for the user to operate the operation input unit, together with an identifier of the apparatus itself, to a communication unit of an inter-apparatus movement time estimation device capable of communicating with a plurality of the apparatuses, wherein the inter-apparatus movement time estimation device comprises: the communication unit to receive, from the plurality of the apparatuses, a plurality of operation notification packets each containing the operation time information; a combination generation unit to generate a plurality of combinations of an operation time of a first apparatus among the plurality of apparatuses and an operation time of a second apparatus among the plurality of apparatuses from the operation time information contained in each of the plurality of operation notification packets received by the communication unit; an operation time difference computation unit to compute a difference between the operation time of the first apparatus and the operation time of the second apparatus as an inter-apparatus operation time difference for each of the plurality of combinations generated by the combination generation unit; an exclusion unit to output an exclusion result in which an inter-apparatus operation time difference whose size is relatively small or whose occurrence probability is relatively low is excluded from a plurality of the operation time differences computed by the operation time difference computation unit; and an inter-apparatus movement time calculation unit to estimate time required for the user to move between the first apparatus and the second apparatus as a necessary inter-apparatus movement time on the basis of the exclusion result outputted by the exclusion unit.

### [Effects of the Invention]

With the inter-apparatus movement time estimation device and according to the inter-apparatus movement time estimation method of the present disclosure, the time required for a user to move around a plurality of apparatuses can be easily estimated. In addition, an apparatus that provides information necessary for such estimation by communicating with the inter-apparatus movement time estimation device can be obtained.

### [Brief Description of the Drawings]

FIG. 1 shows a configuration example of an operation schedule proposal system according to the present disclosure.
FIG. 2 shows an example of an internal configuration of a residential house according to the present disclosure.
FIG. 3 illustrates a configuration of lighting equipment A according to the present disclosure.
FIG. 4 shows a configuration example of an inter-apparatus movement time estimation device according to the present disclosure.
FIG. 5 illustrates operation time information accumulated by a data accumulation unit according to the present disclosure.
FIG. 6 illustrates an aggregate result of inter-apparatus operation time differences according to the present disclosure.
FIG. 7 illustrates an exclusion result in which the data with the inter-apparatus operation time difference equal to or lower than a threshold value (14 seconds) is excluded from the aggregate result shown in FIG. 6.
FIG. 8 illustrates an exclusion result in which the data with an occurrence probability of the inter-apparatus operation time difference equal to or lower than a threshold value (2%) is excluded from the aggregate result shown in FIG. 6.
FIG. 9 shows inter-apparatus movement times between home appliances estimated by an inter-apparatus movement time calculation unit according to the present disclosure.
FIG. 10 shows inter-apparatus movement path lengths between the home appliances estimated by an inter-apparatus movement path length calculation unit according to the present disclosure.

### [Embodiments for Carrying Out the Invention]

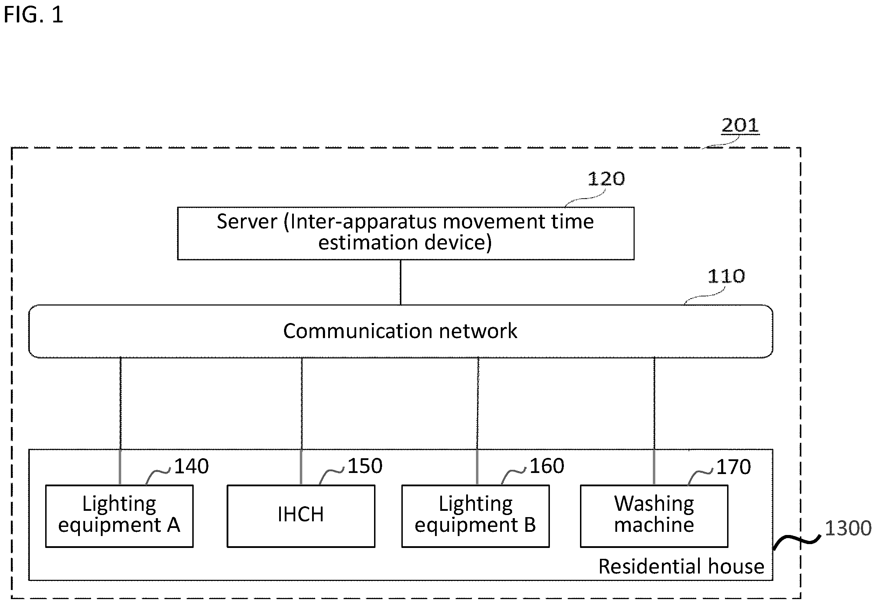

FIG. 1 shows a configuration example of an operation schedule proposal system 201 according to the present disclosure. In this operation schedule proposal system 201, an inter-apparatus movement time estimation device 120 is connected to a plurality of home appliances in a residential house 1300 via a communication network 110. The plurality of home appliances in the residential house 1300 includes, for example, lighting equipment A 140, an IHCH (induction cooker) 150, lighting equipment B 160, and a washing machine 170. Here, it is assumed for example that the inter-apparatus movement time estimation device 120 is a server located outside the residential house 1300, but the inter-apparatus movement time estimation device 120 may be located inside the residential house 1300.

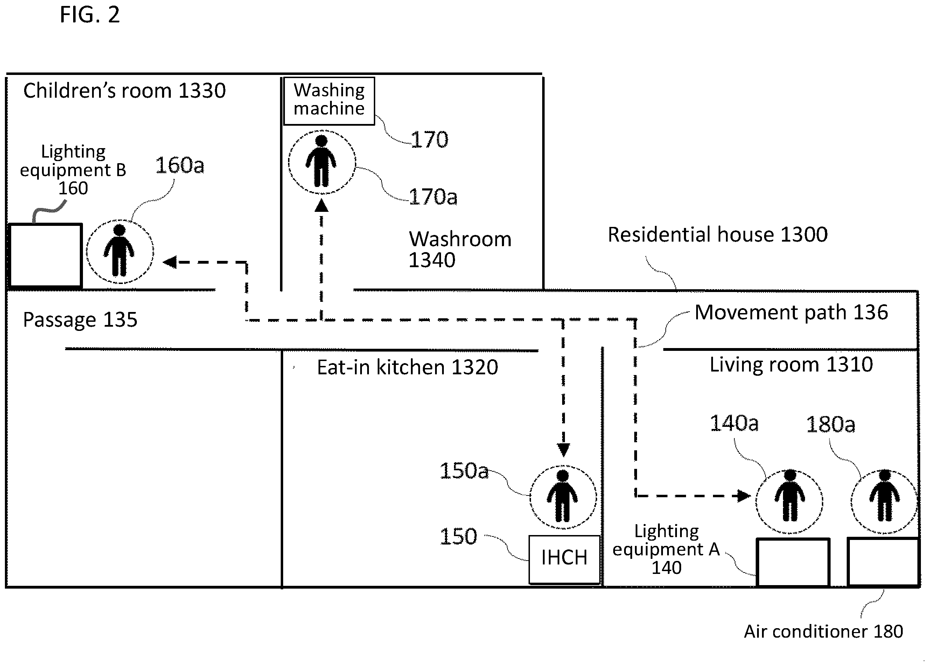

FIG. 2 shows an example of an internal configuration in the residential house 1300. The residential house 1300 includes a living room 1310, an eat-in kitchen 1320, a children's room 1330, and a washroom 1340, in which a user can move between the rooms via a passage 135. The living room 1310 includes the lighting equipment A 140 and an air conditioner 180; the eat-in kitchen 1320 includes an IHCH 150; the children's room 1330 includes the lighting equipment B 160; and a washroom 1340 includes the washing machine 170.

The user goes close to each of the home appliances to operate it. For example, to operate the lighting equipment A 140, the user goes to an adjacent position 140a of the lighting equipment A 140 and operates the lighting equipment A 140. Similarly, to operate the IHCH 150, the user goes to an adjacent position 150a of the IHCH 150 and operates the IHCH 150. Similarly, to operate the lighting equipment B 160, the user goes to an adjacent position 160a of the lighting equipment B 160 and operates the lighting equipment B 160. Similarly, to operate the washing machine 170, the user goes to an adjacent position 170a of the washing machine 170 and operates the washing machine 170.

In order to operate the IHCH 150 after operating the lighting equipment A 140, the user has to depart from the adjacent position 140a of the lighting equipment A 140, exits the living room 1310 where the lighting equipment A 140 is located, passes through the passage 135, enters the eat-in kitchen 1320 where the IHCH 150 is located, goes to the adjacent position 150a of the IHCH 150, and operates the IHCH 150. That is, the user has to pass through the path shown as a movement path 136 in FIG. 2. Similarly, when operating another home appliance, the user has to move to the room where the home appliance which the user wishes to operate is located, and then move to the adjacent position of the home appliance, and eventually can operate the home appliance after these movements. In particular, when the home appliances to be operated are located in different rooms from each other, like the lighting equipment A 140 and the IHCH 150 shown in FIG. 2, the length of the movement path 136 that the user needs to go through is longer than a linear distance between the lighting equipment A 140 and the IHCH 150.

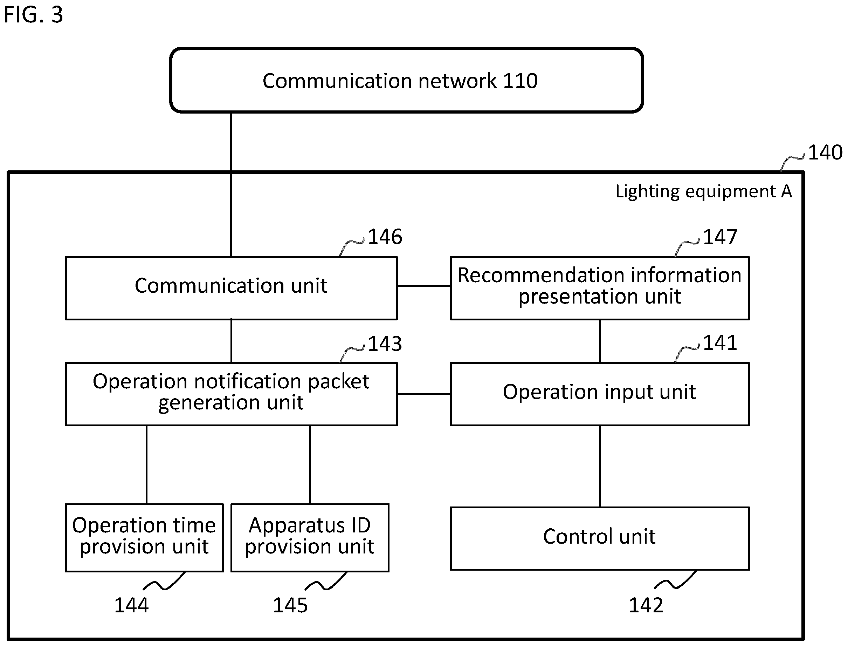

Next, a configuration of each of the home appliances used in the residential house 1300 in FIG. 1 will be described taking the lighting equipment A 140 in FIG. 1 as an example. FIG. 3 illustrates a configuration of the lighting equipment A 140. In FIG. 3, the numeral 141 denotes an operation input unit, which is operated by the user to input an operation instruction and the like for a targeted appliance (here, the lighting equipment A 140). Such an input is referred to as an operation input, hereinafter. The numeral 142 denotes a control unit, which controls the operation of the targeted appliance (here, the lighting equipment A 140) on the basis of the operation input given to the operation input unit 141. The numeral 143 denotes an operation notification packet generation unit, which generates an operation notification packet to be described below. The numeral 144 denotes an operation time provision unit, which outputs a time when the user made an operation input to the operation input unit 141. The numeral 145 denotes an apparatus ID provision unit, which pre-stores and outputs an apparatus ID being an identifier of the lighting equipment A 140 to which the apparatus ID provision unit belongs. The numeral 146 denotes a communication unit, which communicates via the communication network 110. The numeral 147 denotes a recommendation information presentation unit, which presents the user with recommendation information, to be described below, sent from the inter-apparatus movement time estimation device shown in FIG. 1. The configurations of the IHCH 150, the lighting equipment B 160, and the washing machine 170 are also similar to that of the lighting equipment A 140 shown in FIG. 3, except that the configurations of the operation input unit 141 and the control unit 142 thereof are based on the respective functions of the appliances.

Next, an operation of the operation schedule proposal system 201 shown in FIG. 1 performed when the user operates each home appliance shown in FIG. 1 will be described. In the example operation described here, the user performs the following operations: at time 6:10:00, to turn on the lighting equipment A 140; at time 6:10:15; to start heating the IHCH 150; at time 6:10:40, to turn on the lighting equipment B 160; at time 6:10:55, to start the washing machine 170; and at time 6:11:20, to start cooling by the air conditioner 180.

First, at time 6:10:00, an operation input indicating to "turn on" the lighting equipment A 140 shown in FIG. 3 is given to the operation input unit 141. The control unit 142 controls the lighting equipment A 140 in accordance with the operation input given to the operation input unit 141. Here, as the operation input is an instruction to "turn on lighting", the control unit 142 turns on a lighting unit (not shown) of the lighting equipment A 140. The lighting unit is, for example, a fluorescent lamp or an LED.

When an operation input is given to the operation input unit 141, an operation notification packet generation unit 143 generates an operation notification packet. The operation notification packet contains operation time information indicating a time when the operation input is given (here, the time at which the operation input indicating "turn on lighting" is given), an apparatus ID, which is an identifier of the apparatus (here, the lighting equipment A 140), and operation detail information indicating what is included in the operation input (here, "turn on lighting").

In more detail, when the operation input is given to the operation input unit 141, the operation notification packet generation unit 143 acquires the operation detail information indicating the specific operation from the operation input unit 141. The operation notification packet generation unit 143 requests the operation time provision unit 144 for the operation time information indicating the time at which the operation input is given. Upon receiving the request from the operation notification packet generation unit 143, the operation time provision unit 144 outputs the operation time information to the operation notification packet generation unit 143.

The operation notification packet generation unit 143 acquires the apparatus ID, which is an identifier of the apparatus to which the operation notification packet generation unit 143 belongs, from the apparatus ID provision unit 145. The apparatus ID is stored in the apparatus ID provision unit 145 in advance, for example, when the apparatus is being shipped from a factory. Every time an operation input is given to the operation input unit 141 by the user, the operation notification packet generation unit 143 generates an operation notification packet containing an information set (hereinafter, referred to as operation information set) in which the operation detail information for the operation, the operation time information of the operation, and the apparatus ID of the appliance are associated with each other. As a matter of course, the operation notification packet may contain other information.

Although it is described above that the operation notification packet generation unit 143 generates the operation notification packet whenever and any operation input is given to the operation input unit 141, the operation notification packet may be generated only when a specific operation or operations are performed via the operation input unit 141.

Upon completion of generating the operation notification packet, the operation notification packet generation unit 143 requests the communication unit 146 to send the operation notification packet. Upon receiving the request, the communication unit 146 sends the operation notification packet to the inter-apparatus movement time estimation device 120 via the communication network 110.

The other apparatuses, including the IHCH 150, the lighting equipment B 160, and the washing machine 170, also have substantially the same configuration as the lighting equipment A 140 shown in FIG. 3, so that every time they receive an operation input, they each generate the operation notification packet containing the operation information set, in which the operation time information indicating the time when the operation input is given, the apparatus ID of the appliance, and the operation detail information indicating the specific operation are associated with each other, and send the generated operation notification packet to the inter-apparatus movement time estimation device 120.

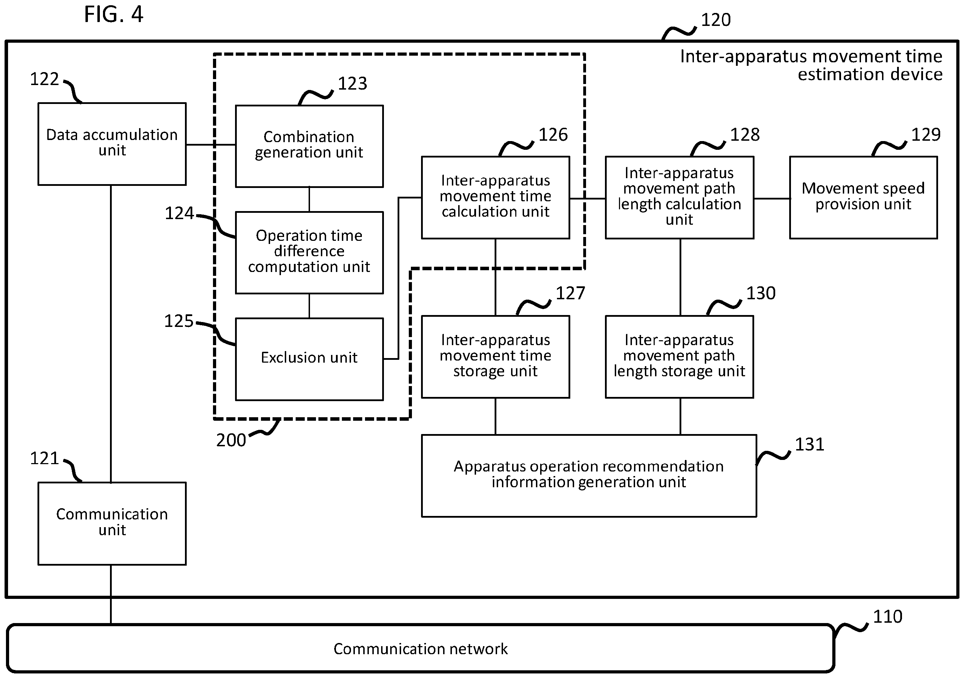

FIG. 4 shows a configuration example of the inter-apparatus movement time estimation device 120. A communication unit 121 of the inter-apparatus movement time estimation device 120 receives, via the communication network 110, an operation notification packet sent from each of the home appliances such as the lighting equipment A 140 and the IHCH 150.

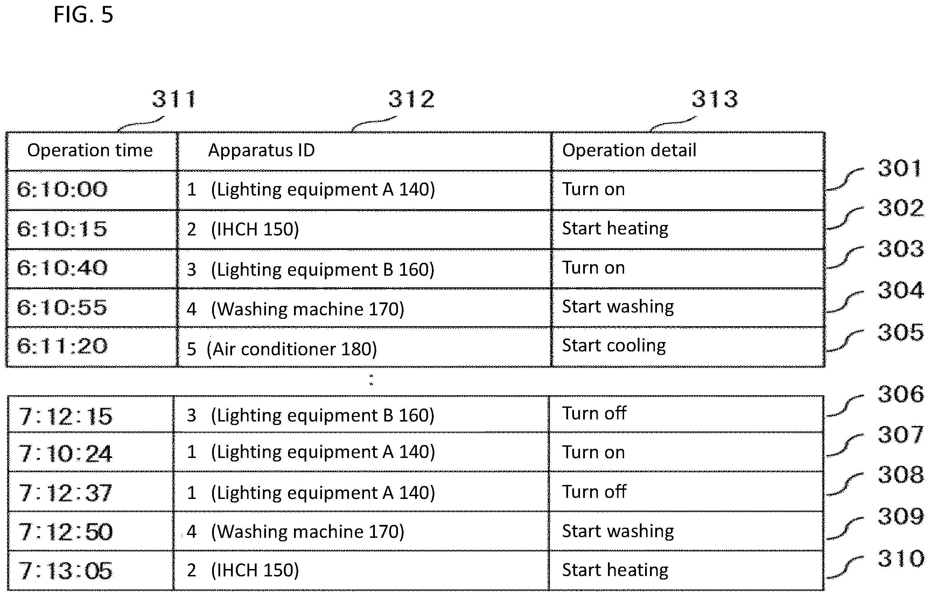

A data accumulation unit 122 accumulates the operation information sets each contained in each operation notification packet received by the communication unit 121. Each of the operation information sets includes the operation time information, the apparatus ID, and the operation detail information associated with each other for the operation performed. If the user performs the home appliance operations described above from time 6:10:00 to time 6:11:20, five operation information sets 301 to 305 are accumulated in the data accumulation unit 122 as shown in FIG. 5.

Each row in the table in FIG. 5 corresponds to one operation information set. In FIG. 5, an operation time 311 is the operation time indicated by the operation time information in the operation information set, an apparatus ID 312 is the apparatus ID included in the operation information set, and an operation detail 313 is the specific operation indicated by the operation detail information included in the operation information set.

Every time the user operates a home appliance, the operation information set is generated within the operated home appliance and sent to the inter-apparatus movement time estimation device 120 as a part of an operation notification packet. Thus, as shown in FIG. 5, the data accumulation unit 122 accumulates a large number of the operation information sets 301 to 310.

An inter-apparatus movement time estimation unit 200 shown in FIG. 4 estimates each time required for the user to move between the installation locations for every combination of two appliances among all of the home appliances concerned on the basis of the information stored in the data accumulation unit 122. The inter-apparatus movement time estimation unit 200 includes a combination generation unit 123, an operation time difference computation unit 124, an exclusion unit 125, and an inter-apparatus movement time calculation unit 126. For example, the inter-apparatus movement time estimation unit 200 performs the following processes shown in (1) through (5) to estimate the time required for the user to move between a first home appliance and a second home appliance.

In the following description, it is assumed that the first home appliance is the lighting equipment A 140 and the second home appliance is the washing machine 170. The description will be made with reference to FIG. 5.
(1) Firstly, the combination generation unit 123 extracts all the operation times in the operation information sets in which the apparatus ID indicates the first home appliance (here, the lighting equipment A 140) from among all the operation information sets accumulated in the data accumulation unit 122. For example, in FIG. 5, since the apparatus ID of the lighting equipment A 140 is 1, the combination generation unit 123 extracts 6:10:00, 7:10:24, and 7:12:37 as the operation times of the operation information sets where the apparatus ID is 1.
(2) Next, for each of the extracted operation times (6:10:00, 7:10:24, and 7:12:37), the combination generation unit 123 identifies an operation information set including the operation time which is directly after the extracted operation time, from among all of the operation information sets accumulated in the data accumulation unit 122, and associates the operation time included in the identified operation information set to the extracted operation time as operation time in proximity. For example, in FIG. 5, the time when an operation was performed directly after 6:10:00 is 6:10:15, so that 6:10:15 is associated with 6:10:00 as the operation time in proximity. The time when an operation was performed directly after 7:10:24 is 7:12:37, so that 7:12:37 is associated with 7:10:24 as the operation time in proximity. The time when an operation was performed directly after 7:12:37 is 7:12:50, so that 7:12:50 is associated with 7:12:37 as the operation time in proximity.
(3) Then, the combination generation unit 123 extracts, from among the combinations of the operation times associated with each other, those in which the operation time in proximity is the operation time of the second home appliance. In FIG. 5, the combination of 6:10:00 and 6:10:15 associated with each other in (2) above is not extracted because 6:10:15, being the operation time in proximity of 6:10:00, is not the operation time of the second home appliance (washing machine 170) but is the operation time of the IHCH 150. The combination of 7:10:24 and 7:12:37 associated with each other in (2) above is not extracted because 7:12:37, being the operation time in proximity of 7:10:24, is not the operation time of the second home appliance (washing machine 170) but is the operation time of the lighting equipment A 140. On the other hand, the combination of 7:12:37 and 7:12:50 associated with each other in (2) above is extracted because 7:12:50, being the operation time in proximity, is the operation time of the second home appliance (washing machine 170). Although only one combination is extracted in this example, a large number of such combinations will be extracted in reality because a much larger number of the operation information sets will be accumulated in the data accumulation unit 122.

Thus, the combination generation unit 123 extracts, from all the operation information sets stored in the data accumulation unit 122, all the combinations of the operation time of the first home appliance and the operation time of the second home appliance corresponding to the case where the second home appliance was operated directly after the first home appliance, and outputs all the extracted combinations as a combination generation result.

Meanwhile, the route along which a user moves from the first home appliance to the second home appliance and the route along which the user moves from the second home appliance to the first home appliance are mostly the same. Therefore, in the processes (1) through (3) above, the combinations corresponding not only to the case where the second home appliance was operated directly after the first home appliance, but also to the case where the first home appliance was operated directly after the second home appliance may be extracted as the combination generation result.

A simpler alternative to the processes (1) through (3) above is that the combination generation unit 123 extracts, from all the operation information sets stored in the data accumulation unit 122, all combinations of the operation time of the operation information set in which the apparatus ID indicates the first home appliance (lighting equipment A 140) and the operation time of the operation information set in which the apparatus ID indicates the second home appliance (washing machine 170), selects, from all of the extracted combinations, a plurality of the combinations with a relatively small difference between the combined operation times, and output them as the combination generation result.

(4) The operation time difference computation unit 124 shown in FIG. 4 computes and outputs the time difference (hereinafter referred to as inter-apparatus operation time difference) between the operation time of the first home appliance and the operation time of the second home appliance combined with each other, for each of all the plurality of combinations (combinations of the operation time of the first home appliance and the operation time of the second home appliance) being the combination generation result outputted by the combination generation unit 123. For example, for the combination of 7:12:37 and 7:12:50 associated with each other in the process (3) above, the operation time difference computation unit 124 outputs 13 seconds as their time difference.

(5) The plurality of inter-apparatus operation time differences outputted by the operation time difference computation unit 124 may possibly include an inter-apparatus operation time difference based on a user's move between the first home appliance and the second home appliance which is different from normal or an inter-apparatus operation time difference based on operations of the two home appliances by two different users. The exclusion unit 125 shown in FIG. 4 excludes as noise, from the plurality of inter-apparatus operation time differences outputted by the operation time difference computation unit 124, the operation time differences which are highly likely to be those based on such user's move different from normal or operations of the first and second home appliances by different users.

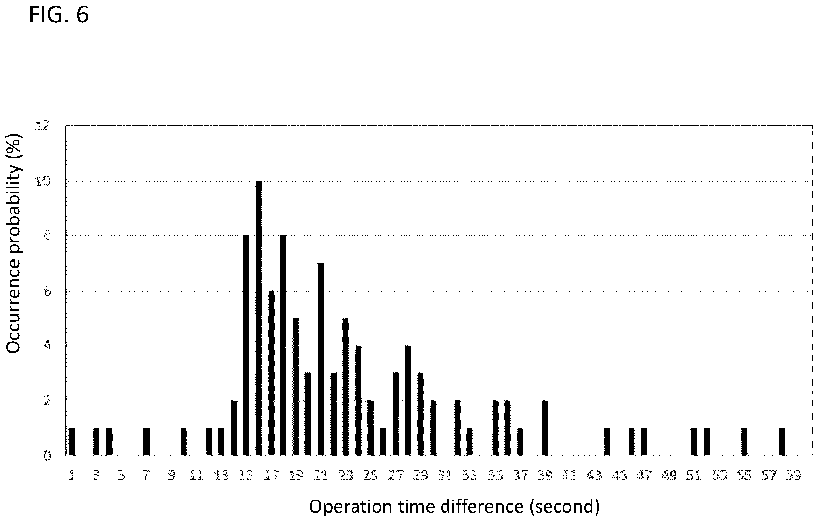

To be more specific, the exclusion unit 125 aggregates the plurality of inter-apparatus operation time differences (inter-apparatus operation time differences when the second home appliance is operated directly after the first home appliance) outputted by the operation time difference computation unit 124 as shown in FIG. 6, for example. In FIG. 6, the horizontal axis represents the inter-apparatus operation time difference (unit: seconds) outputted by the operation time difference computation unit 124, and the vertical axis represents the occurrence probability (unit: %) of the inter-apparatus operation time difference.

In the example shown in FIG. 6, the occurrence probability of each inter-apparatus operation time difference shows a sharp increase between 14 and 15 seconds while staying relatively low at 14 seconds or less in the plurality of inter-apparatus operation time differences outputted by the operation time difference computation unit 124. The inter-apparatus operation time differences characterized by relative smallness and relatively low occurrence probability, as exemplified above, are highly likely due to the fact that the first home appliance and the second home appliance are not operated by the same single user but are operated by two different users. The inter-apparatus movement time estimation device 120 aims to estimate the time required for one user to move between the first home appliance and the second home appliance. Therefore, the inter-apparatus operation time differences when the first home appliance and the second home appliance are operated by different users, which tend to be extremely short compared to the time to be estimated, cannot be used for such estimation. Also, the inter-apparatus operation time differences characterized by relative smallness and relatively low occurrence probability, as exemplified above, may be due to the user's unusual move such as running between the appliances. In view of this, the exclusion unit 125 determines 14 seconds, which is a boundary at which the occurrence probability increases significantly, as a threshold value for accepting the inter-apparatus operation time differences, and excludes, from the plurality of inter-apparatus operation time differences outputted by the operation time difference computation unit 124, the inter-apparatus operation time differences that are equal to or below the threshold value (14 seconds).

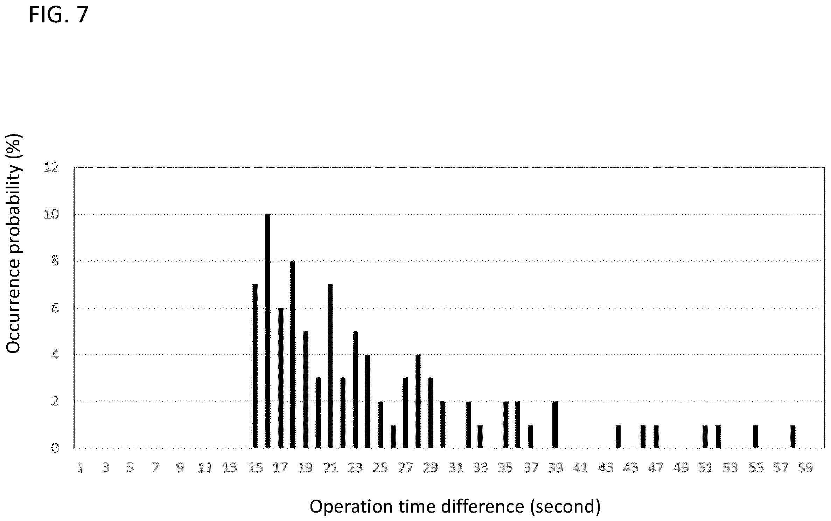

FIG. 7 shows the result of excluding, from the aggregate result shown in FIG. 6, the inter-apparatus operation time differences equal to or less than the threshold value of 14 seconds, which is the threshold value determined by the exclusion unit 125. The exclusion unit 125 outputs, as its output, the plurality of inter-apparatus operation time differences as exclusion result after such exclusion. The output may be data displaying the aggregate result as shown in FIG. 7.

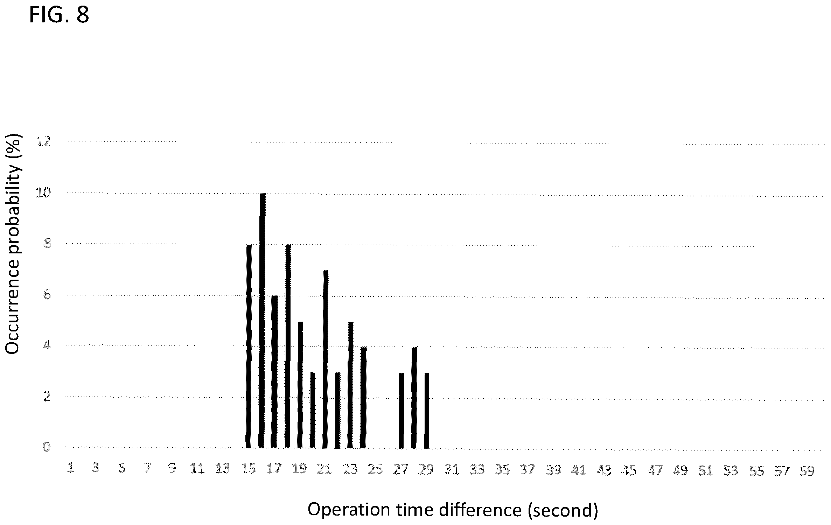

Here, it is described above that the exclusion unit 125 determines 14 seconds at which the occurrence probability fluctuates significantly as the threshold value of the inter-apparatus operation time differences and excludes the inter-apparatus operation time differences equal to or below the threshold value (14 seconds) from the output of the operation time difference computation unit 124 to output the result. Alternatively, the exclusion unit 125 may determine, as the threshold value of the occurrence probability, an occurrence probability of 2%, which is the occurrence probability when the inter-apparatus operation time difference is 14 seconds, and exclude all of the inter-apparatus operation time differences characterized by the occurrence probability equal to or below the threshold value from the output of the operation time difference computation unit 124. FIG. 8 shows the result of excluding, from the aggregate result shown in FIG. 6, the inter-apparatus operation time differences characterized by the occurrence probability equal to or below the threshold value of 2%, which is the threshold value of the occurrence probability determined by the exclusion unit 125. As shown in FIG. 6, in a range where the inter-apparatus operation time difference is relatively small, the occurrence probability of the inter-apparatus operation time difference is also expected to be relatively low. Therefore, also by excluding the inter-apparatus operation time differences whose occurrence probability is equal to or below the threshold value, the noise described above can be eliminated.

In the example above, the exclusion unit 125 determines, on the basis of the change in the occurrence probability of the inter-apparatus operation time difference, the threshold value of the difference between the inter-apparatus operation times or the threshold value of the occurrence probability of the inter-apparatus operation time difference in order to exclude the inter-apparatus operation time differences characterized by the relatively small inter-apparatus operation time difference and the relatively low occurrence probability from the plurality of inter-apparatus operation time differences outputted by the operation time difference computation unit 124. Alternatively, the exclusion unit 125 may exclude, from the plurality of inter-apparatus operation time differences outputted by the operation time difference computation unit 124, a predetermined percentage number of inter-apparatus operation time differences against the total number of the inter-apparatus operation time differences outputted by the operation time difference computation unit 124 in order from the smallest inter-apparatus operation time difference. For example, the exclusion unit 125 may output the result obtained by excluding, from the plurality of inter-apparatus operation time differences outputted by the operation time difference computation unit 124, a predetermined percentage (e.g., 10%) number of inter-apparatus operation time differences against the total number of the inter-apparatus operation time differences outputted by the operation time difference computation unit 124 in order from the smallest inter-apparatus operation time difference.

The inter-apparatus movement time calculation unit 126 estimates the time required for the user to move between the first home appliance and the second home appliance (hereinafter, referred to as necessary inter-apparatus movement time) on the basis of the above exclusion result outputted by the exclusion unit 125. The inter-apparatus movement time calculation unit 126 determines, for example, the smallest inter-apparatus operation time difference included in the exclusion result as the estimate of the necessary inter-apparatus movement time. For example, according to the aggregate result shown in FIG. 7, the necessary inter-apparatus movement time is estimated to be 15 seconds. Also according to the aggregate result shown in FIG. 8, the necessary inter-apparatus movement time is estimated to be 15 seconds. The inter-apparatus movement time calculation unit 126 may estimate the necessary inter-apparatus movement time using any computation such as averaging the inter-apparatus operation time differences included in the exclusion result. The inter-apparatus movement time calculation unit 126 performs such an estimation of the inter-apparatus movement time for all and every combination of the home appliances.

The estimate of the inter-apparatus movement time obtained by the inter-apparatus movement time calculation unit 126 is based on the actual inter-apparatus operation time differences that were highly likely required for a single user to move from the adjacent position of the first home appliance to the adjacent position of the second home appliance, so that it is possible to estimate with high accuracy the time required for the user to move between these two home appliance.

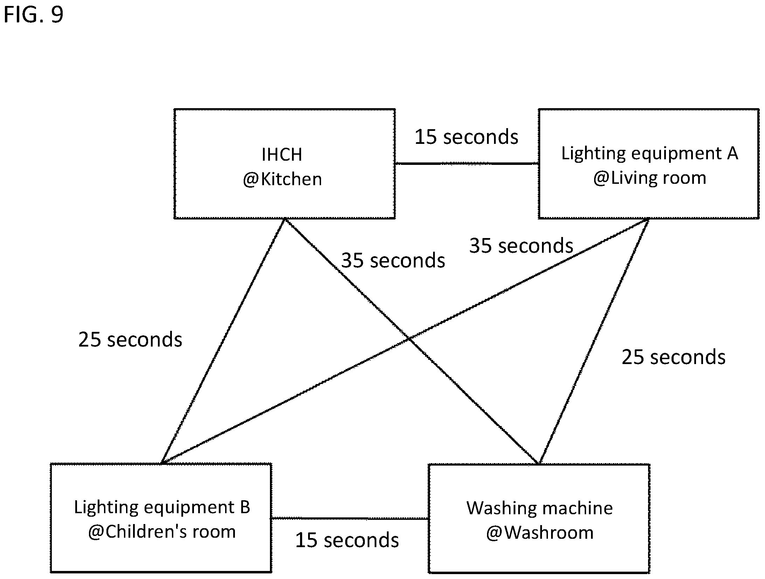

FIG. 9 shows the inter-apparatus movement times between the home appliances estimated by the inter-apparatus movement time calculation unit 126. In FIG. 9, the inter-apparatus movement time calculation unit 126 estimates the inter-apparatus movement time for each of all combinations of two different appliances among the IHCH, the lighting equipment A, the lighting equipment B, and the washing machine. In FIG. 9, for example, the inter-apparatus movement time calculation unit 126 estimates that the user moves from the lighting equipment A to the lighting equipment B in 35 seconds and moves from the lighting equipment B to the lighting equipment A also in 35 seconds. Here, the necessary inter-apparatus movement time for the user to move from the lighting equipment A to the lighting equipment B and the necessary inter-apparatus movement time for the user to move from the lighting equipment B to the lighting equipment A are not distinguished from each other and both estimated to be the same 35 seconds. Alternatively, however, these necessary inter-apparatus movement times may be distinguished from each other and estimated individually. The inter-apparatus movement times between the appliances estimated by the inter-apparatus movement time calculation unit 126 are stored in an inter-apparatus movement time storage unit 127 shown in FIG. 4.

An inter-apparatus movement path length calculation unit 128 shown in FIG. 4 estimates an inter-apparatus movement path length, which is the length of the movement path between two appliances, for each of all the combinations of the appliances by multiplying each of all the inter-apparatus movement times estimated by the inter-apparatus movement time calculation unit 126 by a movement speed of the user provided by a movement speed provision unit 129. For example, if the inter-apparatus movement time between the first home appliance and the second home appliance is 15 seconds and the user's movement speed is 3600 meters per hour (one meter per second), the inter-apparatus movement path length between the first home appliance and the second home appliance can be estimated to be 15 meters.

The movement speed provision unit 129 stores in advance a normal movement speed of a person in a residential house as the user's movement speed and provides the stored movement speed as the user's movement speed to be used for the above multiplication. The user's movement speed stored in the movement speed provision unit 129 can be changed by the user.

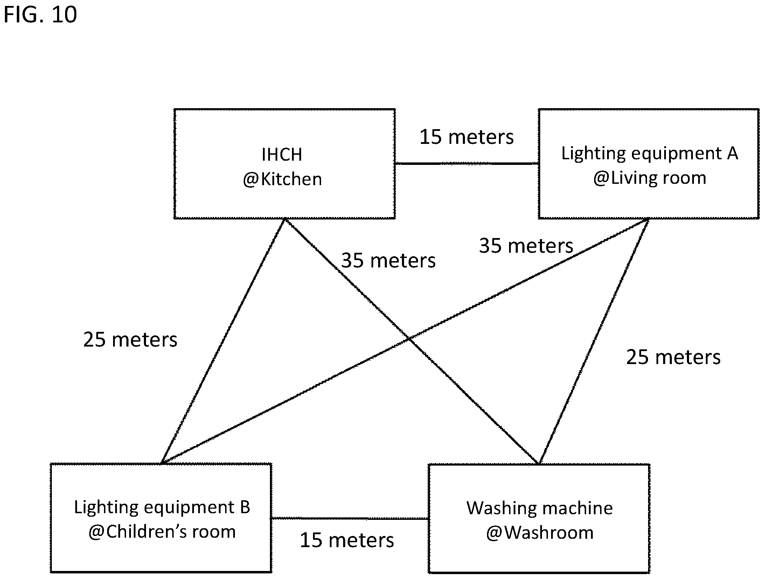

FIG. 10 exemplarily shows the inter-apparatus movement path lengths estimated by the inter-apparatus movement path length calculation unit 128. In FIG. 10, the inter-apparatus movement path length calculation unit 128 estimates the inter-apparatus movement path length for each of all combinations of two different appliances among the IHCH, the lighting equipment A, the lighting equipment B, and the washing machine. In FIG. 10, for example, the inter-apparatus movement path length calculation unit 128 calculates that the inter-apparatus movement path length between the lighting equipment A and the lighting equipment B is 35 meters. In a case where the inter-apparatus movement time calculation unit 126 distinguishes between the necessary inter-apparatus movement time taken to move from the lighting equipment A to lighting equipment B and the necessary inter-apparatus movement time taken to move from the lighting equipment B to the lighting equipment A and calculates each movement time as an individual value, then the inter-apparatus movement path length calculation unit 128 also distinguishes them and calculates an individual inter-apparatus movement path length for each of the movement times. The inter-apparatus movement path lengths between the home appliances calculated by the inter-apparatus movement path length calculation unit 128 are stored in an inter-apparatus movement path length storage unit 130.

The inter-apparatus movement path length calculated by the inter-apparatus movement path length calculation unit 128 is not a linear distance between the installation position of the first home appliance and the installation position of the second home appliance but corresponds to the movement distance when the user moves between the adjacent position of the first home appliance and the adjacent position of the second home appliance in the residential house 1300. This makes it possible to create a schedule, including order of going around the plurality of appliances, which allows the user to operate the appliances by moving along the shortest path or a path as short as possible on the basis of the inter-apparatus movement path lengths estimated by the inter-apparatus movement path length calculation unit 128.

An apparatus operation recommendation information generation unit 131 shown in FIG. 4 uses the inter-apparatus movement path lengths stored in the inter-apparatus movement path length storage unit 130 to generate a schedule advantageous to operate the home appliances for recommending it to the user.

The apparatus operation recommendation information generation unit 131 stores in advance the respective operation details for the home appliances that are likely to be performed by the user as a task list for each of time segments such as morning, afternoon, and evening. The task list includes multiple task forecasts, in each of which the apparatus ID of the home appliance that the user is likely to operate within the time segment and the specific operation that the user is likely to perform to the home appliance are related to each other. The apparatus operation recommendation information generation unit 131 generates the schedule for the user to operate the home appliances, on the basis of the task list and the inter-apparatus movement path lengths stored in the inter-apparatus movement path length storage unit 130.

The task list may be inputted in advance by the user or may be generated by the apparatus operation recommendation information generation unit 131 by forecasting from the plurality of operation information sets accumulated in the data accumulation unit 122. The time segment here also may be a time span such as 30 minutes or one hour. Each time segment may be further classified by days of week.

The operation of the apparatus operation recommendation information generation unit 131 will be described in more detail. In the following, an example will be described, in which a task list for a morning time segment, stored in the apparatus operation recommendation information generation unit 131, includes the following four tasks: to turn on the lighting equipment A 140; to start heating the IHCH 150; to turn on the lighting equipment B 160; and to start the washing machine 170.

The apparatus operation recommendation information generation unit 131 generates an operation schedule to propose to the user for the task list of the morning time segment. In detail, the apparatus operation recommendation information generation unit 131 generates a schedule with an execution order of tasks that allows the user to go around the appliances for the four tasks included in the task list with the shortest movement distance as the above-described operation schedule on the basis of the inter-apparatus movement distances stored in the inter-apparatus movement path length storage unit 130.

For example, the apparatus operation recommendation information generation unit 131 calculates that the total of the inter-apparatus movement distances is 80 meters if the execution order of the four tasks is as follows: to turn on the lighting equipment A 140; to start heating the IHCH 150; to turn on the lighting equipment B 160; and to start the washing machine 170. Also, the apparatus operation recommendation information generation unit 131 calculates that the total of the inter-apparatus movement distances is 120 meters if the execution order of the four tasks is as follows: to turn on the lighting equipment A 140; to turn on the lighting equipment B 160; to start heating the IHCH 150; and to start the washing machine 170. The apparatus operation recommendation information generation unit 131 selects the operation schedule with the smallest total of the inter-apparatus movement distances from among the plurality of operation schedules with different execution orders for the four tasks and determines the selected operation schedule as the schedule to propose to the user.

As the method to calculate the operation schedule including the order of going around a plurality of apparatuses for minimizing the moving cost that is exemplified above as the total of the inter-apparatus movement path lengths, any known calculation method, represented for example by well-known solutions to the Traveling Salesman Problem, can be used to calculate the optimal schedule for various parameters. For example, in the above example of the two operation schedules, the former schedule is more desirable because the total of the inter-apparatus movement distances is smaller. The apparatus operation recommendation information generation unit 131 generates apparatus operation recommendation information on the basis of such desirable schedules.

Although, here, the inter-apparatus movement distances stored in the inter-apparatus movement path length storage unit 130 is used as the parameter to calculate the moving cost above, the inter-apparatus movement times stored in the inter-apparatus movement time storage unit 127-or both of the inter-apparatus movement distances and the inter-apparatus movement times-may be used as the parameter(s) to calculate the moving cost, alternatively.

Upon detecting, in the morning, that the communication unit 121 has received an operation notification packet indicating that the lighting equipment A 140 has been turned on, the apparatus operation recommendation information generation unit 131 generates, on the basis of the operation schedule generated above, apparatus operation recommendation information to cause the lighting equipment A 140 to perform an information presentation including a message to suggest the order of going around the appliances to the user, for example, "Why not start heating the IHCH 150 next?" and sends the apparatus operation recommendation information to the lighting equipment A 140 via the communication unit 121.

Upon receiving the apparatus operation recommendation information via the communication unit 146, the recommendation information presentation unit 147 of the lighting equipment A 140 performs the information presentation designated by the apparatus operation recommendation information to the user. If the apparatus operation recommendation information is requesting presentation of a message, "Why not start heating the IHCH 150, next?", the recommendation information presentation unit 147 presents the message as a screen display or as a voice message. The method of presentation is not limited to the screen display or the voice message, as long as the message can be offered to the user.

Similarly, upon detecting, in the morning, that the communication unit 121 has received an operation notification packet indicating that the IHCH 150 has started the heating operation, the apparatus operation recommendation information generation unit 131 generates the apparatus operation recommendation information requesting the IHCH 150 to present a message, for example, "Why not to turn on the lighting equipment B 160, next?" and transmits the generated information to the IHCH 150 via the communication unit 121.

Upon receiving the apparatus operation recommendation information via the communication unit 146, the recommendation information presentation unit 147 of the IHCH 150 performs the information presentation designated by the apparatus operation recommendation information to the user. If the apparatus operation recommendation information is requesting presentation of a message, "Why not turn on the lighting equipment B 160, next?", the message is presented as a screen display or as a voice message. The method of presentation is not specifically limited as long as the message can be offered to the user 190.

The similar apparatus operation recommendation information is sent to the lighting equipment B 160 and the washing machine 170, and in each of those appliances, the information presentation designated by the apparatus operation recommendation information is performed to the user.

As described above, upon detecting the reception of an operation notification packet, the apparatus operation recommendation information generation unit 131 generates the apparatus operation recommendation information suggesting the order of the appliances to be operated on the basis of the above operation schedule generated from the accumulation of the operation notification packets received in the past and sends the generated apparatus operation recommendation information to the home appliances via the communication unit 121. Upon receiving the apparatus operation recommendation information, each of the home appliances presents the received information to the user via the recommendation information presentation unit 147, so that the desirable operation schedule can be presented to the user.

Note that the present disclosure is not limited to the embodiments described above, but can be transformed in various ways to the extent that the transformations do not deviate from the scope of the present disclosure.

### [Description of Symbols]

- 110............: communication network,
- 120............: inter-apparatus movement time estimation device,
- 1300 ..........: residential house,
- 140............: lighting equipment A,
- 150............: induction cooker (IHCH),
- 160............: lighting equipment B,
- 170............: washing machine,
- 180............: air conditioner,
- 1310 ..........: living room,
- 1320..........: eat-in kitchen,
- 1330..........: children's room,
- 1340..........: washroom,
- 121............: communication unit,
- 122............: data accumulation unit,
- 123............: combination generation unit,
- 124............: operation time difference computation unit,
- 125............: exclusion unit,
- 126............: inter-apparatus movement time calculation unit,
- 127............: inter-apparatus movement time storage unit,
- 128............: inter-apparatus movement path length calculation unit,
- 129............: movement speed provision unit,
- 130............: inter-apparatus movement path length storage unit,
- 131............: apparatus operation recommendation information generation unit,
- 141............: operation input unit,
- 142............: control unit,
- 143............: operation notification packet generation unit,
- 144............: operation time provision unit,
- 145............: apparatus ID provision unit,
- 146............: communication unit,
- 147............: recommendation information presentation unit,
- 200............: inter-apparatus movement time estimation unit

## Claims

1. An inter-apparatus movement time estimation device comprising:
a communication unit to receive, from a plurality of apparatuses, a plurality of operation notification packets each containing operation time information which is information about an operation time of a user for each of the apparatuses;
a combination generation unit to generate a plurality of combinations of an operation time of a first apparatus among the plurality of apparatuses and an operation time of a second apparatus among the plurality of apparatuses from the operation time information contained in each of the plurality of operation notification packets received by the communication unit;
an operation time difference computation unit to compute a difference between the operation time of the first apparatus and the operation time of the second apparatus as an inter-apparatus operation time difference for each of the plurality of combinations generated by the combination generation unit;
an exclusion unit to output an exclusion result in which an inter-apparatus operation time difference whose occurrence probability is relatively low or whose size is relatively small is excluded from a plurality of the inter-apparatus operation time differences computed by the operation time difference computation unit; and
an inter-apparatus movement time calculation unit to estimate time required for the user to move between the first apparatus and the second apparatus as a necessary inter-apparatus movement time on the basis of the exclusion result outputted by the exclusion unit.

2. The inter-apparatus movement time estimation device according to claim 1, wherein the combination generation unit generates, as the plurality of combinations, combinations of the operation time of the first apparatus and the operation time of the second apparatus which is operated directly after the first apparatus.

3. The inter-apparatus movement time estimation device according to claim 1 or 2, wherein the exclusion unit determines a threshold value of the inter-apparatus operation time difference for excluding the inter-apparatus operation time difference whose occurrence probability is relatively low on the basis of the respective occurrence probabilities of the plurality of the inter-apparatus operation time differences computed by the operation time difference computation unit and excludes an inter-apparatus operation time difference whose size is equal to or below the threshold value.

4. The inter-apparatus movement time estimation device according to claim 1 or 2, wherein the exclusion unit determines a threshold value of the occurrence probability for excluding the inter-apparatus operation time difference whose occurrence probability is relatively low on the basis of the respective occurrence probabilities of the plurality of the inter-apparatus operation time differences computed by the operation time difference computation unit and excludes an inter-apparatus operation time difference whose occurrence probability is equal to or below the threshold value.

5. The inter-apparatus movement time estimation device according to claim 1 or 2, wherein the exclusion unit excludes, from the plurality of the inter-apparatus operation time differences computed by the operation time difference computation unit, a predetermined percentage number of inter-apparatus operation time differences against the total number of the plurality of inter-apparatus operation time differences in order from the smallest inter-apparatus operation time difference.

6. The inter-apparatus movement time estimation device according to any one of claims 1 to 5, wherein the inter-apparatus movement time calculation unit estimates the necessary inter-apparatus movement time to be the smallest value of the exclusion results outputted by the exclusion unit.

7. The inter-apparatus movement time estimation device according to any one of claims 1 to 6, further comprising:
a movement speed provision unit to store a movement speed of the user; and
an inter-apparatus movement path length calculation unit to estimate, as an inter-apparatus movement path length, a movement distance of the user along a movement path between the first apparatus and the second apparatus by multiplying the necessary inter-apparatus movement time estimated by the inter-apparatus movement time calculation unit by the movement speed stored by the movement speed provision unit.

8. The inter-apparatus movement time estimation device according to claim 7, further comprising an apparatus operation recommendation information generation unit to generate, on the basis of the inter-apparatus movement path lengths estimated by the inter-apparatus movement path length calculation unit, a schedule including an order for the user to go around two or more of the plurality of apparatuses.

9. The inter-apparatus movement time estimation device according to any one of claims 1 to 8, further comprising an apparatus operation recommendation information generation unit to generate, on the basis of the necessary inter-apparatus movement times estimated by the inter-apparatus movement time calculation unit, a schedule including an order for the user to go around two or more of the plurality of apparatuses.

10. The inter-apparatus movement time estimation device according to claim 8 or 9, wherein the apparatus operation recommendation information generation unit generates a message suggesting to the user an apparatus operation to be performed next on the basis of the generated schedule.

11. An inter-apparatus movement time estimation method for estimating time required for a user to move between a plurality of apparatuses, the method comprising:
receiving, from the plurality of apparatuses, a plurality of operation notification packets each containing operation time information which is information about an operation time of a user for each of the apparatuses;
generating a plurality of combinations of an operation time of a first apparatus among the plurality of apparatuses and an operation time of a second apparatus among the plurality of apparatuses from the operation time information contained in each of the plurality of operation notification packets received;
computing, for each of the plurality of combinations, a difference between the operation time of the first apparatus and the operation time of the second apparatus as an inter-apparatus operation time difference;
outputting an exclusion result in which an inter-apparatus operation time difference whose occurrence probability is relatively low or whose size is relatively small is excluded from a plurality of the inter-apparatus operation time differences; and
estimating time required for the user to move between the first apparatus and the second apparatus on the basis of the exclusion result.

12. An apparatus comprising:
an operation input unit to be operated by a user; and
a communication unit to send operation time information which is information about an operation time for the user to operate the operation input unit, together with an identifier of the apparatus itself, to a communication unit of an inter-apparatus movement time estimation device capable of communicating with a plurality of the apparatuses, wherein the inter-apparatus movement time estimation device comprises:
the communication unit to receive, from the plurality of the apparatuses, a plurality of operation notification packets each containing the operation time information;
a combination generation unit to generate a plurality of combinations of an operation time of a first apparatus among the plurality of apparatuses and an operation time of a second apparatus among the plurality of apparatuses from the operation time information contained in each of the plurality of operation notification packets received by the communication unit;
an operation time difference computation unit to compute a difference between the operation time of the first apparatus and the operation time of the second apparatus as an inter-apparatus operation time difference for each of the plurality of combinations generated by the combination generation unit;
an exclusion unit to output an exclusion result in which an inter-apparatus operation time difference whose occurrence probability is relatively low or whose size is relatively small is excluded from a plurality of the inter-apparatus operation time differences computed by the operation time difference computation unit; and
an inter-apparatus movement time calculation unit to estimate time required for the user to move between the first apparatus and the second apparatus as a necessary inter-apparatus movement time on the basis of the exclusion result outputted by the exclusion unit.
